Europäisches Patentamt

European Patent Office

Office européen des brevets

(19)

(11) EP 0 872 709 A1

## (12) DEMANDE DE BREVET EUROPEEN

(43) Date de publication:
**21.10.1998 Bulletin 1998/43**

(51) Int Cl.⁶: **G01B 17/02**

(21) Numéro de dépôt: **98410036.2**

(22) Date de dépôt: **10.04.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **17.04.1997 FR 9704980**

(71) Demandeur: **Bouvier Darling
38600 Fontaine (FR)**

(72) Inventeur: **Mathieu Goudier, Dominique
38240 Meylan (FR)**

(74) Mandataire: **Hecké, Gérard
Cabinet HECKE
World Trade Center - Europole,
5, Place Robert Schuman,
BP 1537
38025 Grenoble Cedex 1 (FR)**

(54) **Dispositif de mesure à ultra-sons de l'épaisseur d'un revêtement superficiel d'un élément bimétallique.**

(57)   Un capteur 30 à ultra-sons est appliqué à la face externe d'un revêtement superficiel d'un élément bimétallique, notamment un siège 16 en acier d'une vanne, pour déterminer l'épaisseur du revêtement 14, lequel est réalisé en un alliage anti-usure ayant une dureté supérieure à celle de l'acier du siège 16. Le capteur 30 est relié par une liaison électrique 26 à un circuit de traitement, ayant une mémoire pour l'enregistrment de données de réglage et de paramétrage relatives à la nature des différents matériaux de l'élément bimétallique, et de la vitesse de déplacement des ondes ultrasonores dans chacun desdits matériaux. Le capteur 30 est inséré dans un logement 31 d'un élément support solidaire d'un outillage fixé au corps de la vanne par un organe de positionnement réglable .

FIG. 2

**Description**

L'invention est relative à un dispositif de mesure de l'épaisseur d'un revêtement en alliage métallique au moyen d'un capteur à ultra-sons connecté électriquement à un circuit de traitement destiné à afficher la valeur de l'épaisseur dudit revêtement, lequel est fixé sur un substrat de matériau métallique différent de celui du revêtement pour constituer un élément bimétallique, le capteur à ultra-sons étant appliqué directement sur la face externe du revêtement pour émettre des ondes ultrasonores de fréquences comprises de 1 à 20 MHz à travers l'élément bimétallique.

Le principe de mesure de l'épaisseur d'une couche métallique au moyen d'un capteur à émission d'ondes ultra-sonores s'effectue généralement en faisant le rapport du temps de propagation de l'onde par la vitesse de l'onde dans l'alliage ( voir documents US 4398421 et EP 429854). La mise en oeuvre de ce procédé est facile pour un alliage ou un matériau de même nature, car la vitesse de propagation de l'onde ultrasonore est constante pour un matériau donné. A chaque matériau correspond une vitesse de propagation donnée de l'onde ultrasonore.

Le document FR 2483073 se rapporte à un procédé de mesure des épaisseurs d'une couche métallique de placage et d'une couche d'un métal de base au moyen d'une source d'ondes ultrasonores pulsées. Les signaux électriques détectés sont analysés sur un oscilloscope pour déterminer la position de la surface intermédiaire entre les deux couches.

Un premier objet de l'invention consiste à réaliser un dispositif de mesure à ultra-sons destiné à faciliter la détermination de l'épaisseur d'un revêtement superficiel d'un élément bimétallique en fonction de la nature des matériaux.

Un deuxième objet de l'invention consiste à réaliser un dispositif de mesure à ultra-sons particulièrement adapté pour la vérification de l'épaisseur du revêtement superficiel du siège d'un appareil de robinetterie.

Le dispositif de mesure selon l'invention est caractérisé en ce qu'il comporte :

- un outillage mécanique pourvu d'un élément de support du capteur à ultra-sons, et d'un organe de positionnement prenant appui sur une bride du corps, notamment d'une vanne ou d'un appareil de robinetterie,
- des moyens de mise en forme du signal de sortie du capteur,
- des moyens de mémoire pour mémoriser certaines données de réglage et de paramétrage relatives à la nature de différents matériaux de l'élément bimétallique,
- et des moyens de calcul qui élaborent un signal représentatif de l'épaisseur du revêtement superficiel à partir des informations fournies par les moyens de mise en forme, et des données de réglage et de paramétrage stockées dans les moyens de mémoire.

Selon une caractéristique de l'invention, le substrat est formé par un siège annulaire en acier, ayant une dureté inférieure à celle du revêtement superficiel, lequel est formé par un alliage à base de cobalt, fer, chrome, nickel, et/ou magnésium et silicium, ou tout autre composant métallique.

Selon un mode de réalisation préférentiel, l'élément du support comporte une couronne de maintien sur laquelle est répartie une pluralité de capteurs à ultra-sons destinés à effectuer des mesures simultanées en plusieurs points du revêtement.

Les informations de paramétrage enregistrées dans les moyens de mémoire concernent la vitesse de déplacement de l'onde ultrasonore dans chacun des matériaux constitutifs de l'élément bimétallique.

Les informations de réglage enregistrées dans les moyens de mémoire concernent les données de calibrage en fonction de l'épaisseur à mesurer, et des données dimensionnelles relatives à la taille et au nombre de capteurs.

D'autres avantages et caractéristiques ressortiront plus clairement de la description qui va suivre d'un mode de mise en oeuvre de l'invention, donné à titre d'exemple non limitatif, et représenté aux dessins annexés, dans lesquels :

- la figure 1 est une vue en coupe du dispositif de mesure installé sur un outillage à l'intérieur du corps d'une vanne ;
- la figure 2 est une vue partielle à échelle agrandie de la zone de mesure, représentant l'élément bimétallique du siège et le capteur à ultra-sons ;
- la figure 3A représente une vue agrandie en coupe de l'élément bimétallique, et la propagation des ondes ultrasonores dans le revêtement superficiel ;
- la figure 3B montre un diagramme des temps de propagation de l'onde incidente, et de l'onde réfléchie ;
- la figure 4 montre le circuit électrique schématique du dispositif de mesure selon l'invention ;
- la figure 5 est une vue en coupe selon la figure 5-5 de la figure 1.

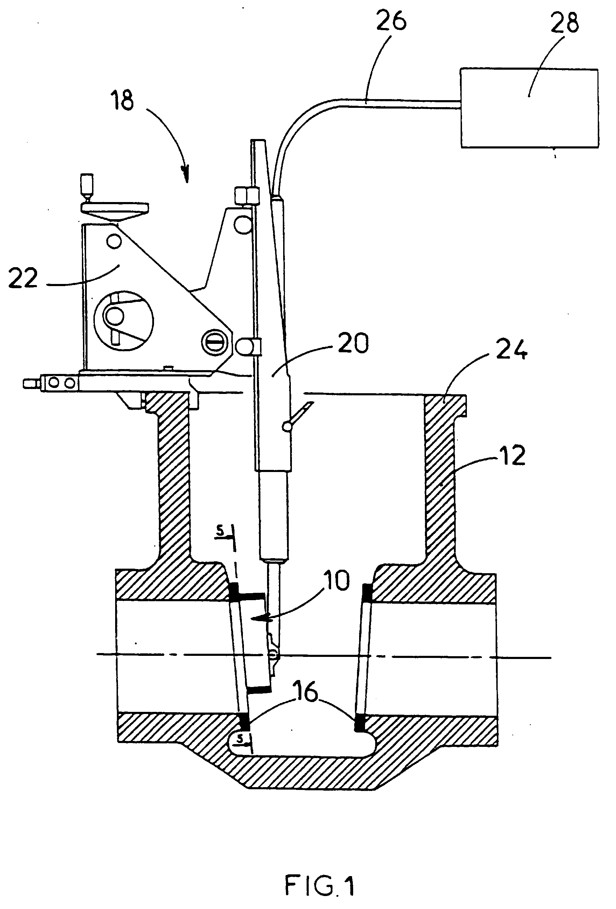

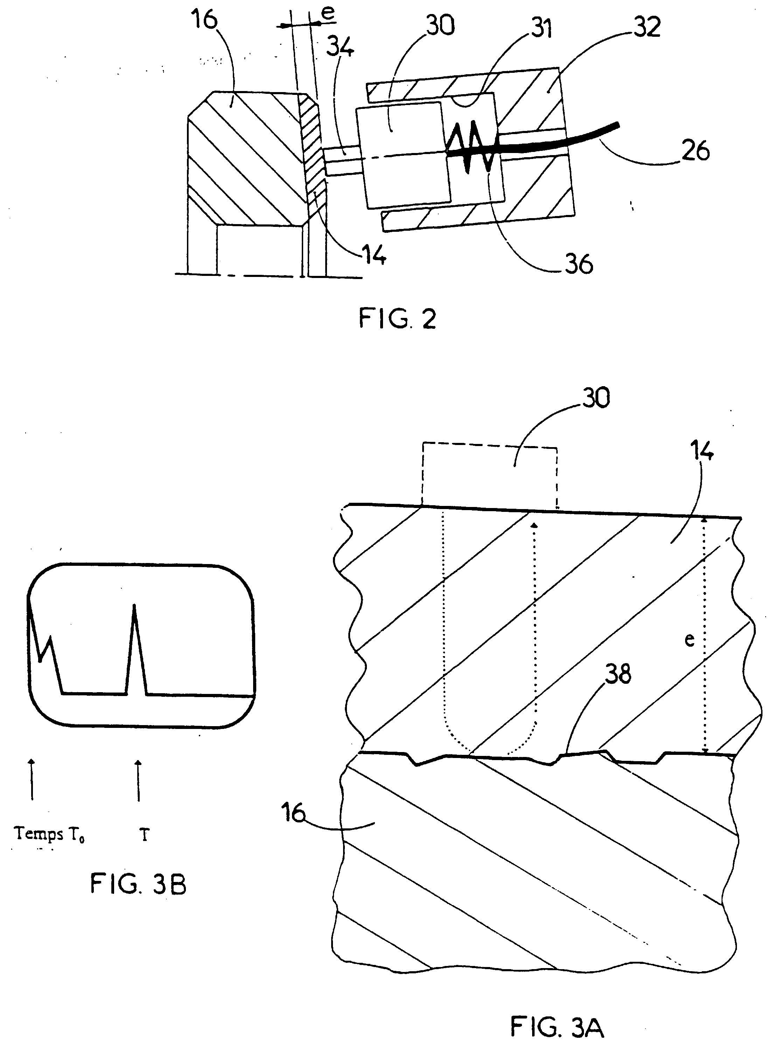

En référence aux figures 1 et 2, un dispositif de mesure à ultra-sons 10 est introduit à l'intérieur d'un corps métallique d'une vanne 12 pour mesurer l'épaisseur du revêtement 14 superficiel en matériau métallique anti-usure fixé sur chaque siège 16 en acier. Le siège est conformé selon un substrat, et le revêtement superficiel 14 est constitué par un alliage ayant une dureté supérieure à celle de l'acier du siège 16, de manière à avoir une bonne résistance mécanique à l'usure. L'alliage du revêtement 14 peut être à base de cobalt, fer, chrome, magnésium et silicium, mais tout autre alliage anti-usure peut être utilisé. L'épaisseur e du revêtement 14 peut atteindre quelques millimètres en fonction de la nature de l'alliage et du type de vanne.

Le dépôt du revêtement superficiel 14 sur le siège 16 s'effectue par exemple par soudure, mais tout autre technique d'assemblage ou de dépôt peut être prévue en fonction de la nature de l'alliage du revêtement 14. Le siège 16 et son revêtement 14 superficiel forment un élément bimétallique.

La vanne 12 est par exemple une vanne d'isolement pour un circuit d'eau de réfrigération, notamment du circuit primaire ou secondaire d'une centrale électrique à chaudière nucléaire ou autre. Elle peut bien entendu être utilisée pour tout autre appareil de robinetterie.

Le dispositif de mesure à ultra-sons 10 est monté sur un outillage 18 mécanique, pourvu d'un élément de support 20 vertical, et d'un organe de positionnement 22 prenant appui sur la bride 24 annulaire après le retrait du couvercle ( non représenté). Les capteurs du dispositif de mesure à ultrasons 10 sont connectés par une liaison électrique 26 à un circuit de traitement 28 disposé à l'extérieur du corps de la vanne 12.

Chaque capteur 30 à ultrasons (figure 2) est inséré dans un logement 31 annulaire d'une couronne 32 de maintien, et comporte un palpeur 34 venant en contact direct avec la surface extérieure du revêtement 14 anti-usure. Un ressort 36 est inséré entre le capteur 30 et le fond du logement 31 pour obtenir une bonne pression de contact du palpeur 34 contre le revêtement 14.

Un liquide peut être injecté vers la zone de contact du palpeur 34 sur le revêtement 14 pour améliorer la transmission des ondes ultrasonores émises par le palpeur 30.

En référence aux figures 3A et 3B, la mesure de l'épaisseur e du revêtement 14 anti-usure s'effectue au moyen de la formule (1) suivante :

$$(1) \qquad e = \frac{T - TO}{2V}$$

où

TO représente le temps de propagation de l'onde ultrasonore incidente émise depuis le capteur 30 vers l'interface 38 de séparation du revêtement 14 en alliage et du siège 16 en acier;
T est le temps de propagation de l'onde ultrasonore de retour depuis l'interface 38 vers le capteur 30;
V est la vitesse de l'onde dans l'alliage du revêtement 14.

Pour l'alliage à base de cobalt du revêtement 14, la vitesse de l'onde ultrasonore est de l'ordre de 6000 m/s. Cette vitesse est différente dans l'acier du siège 16, car elle dépend de la nature et de la composition spécifique du matériau.

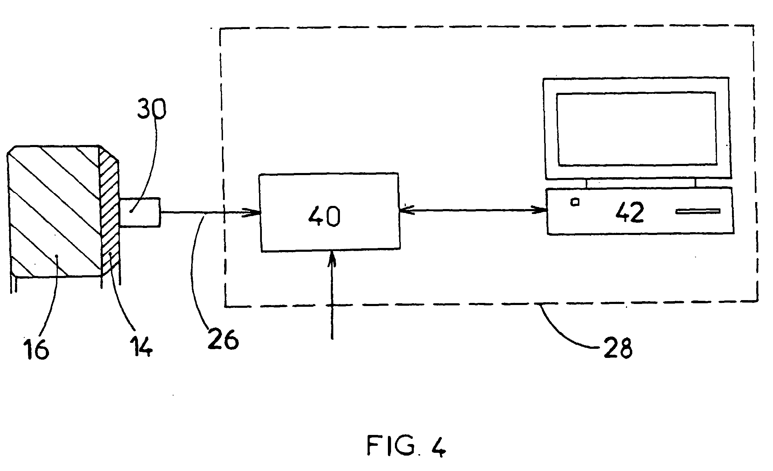

En référence à la figure 4, le procédé mis en oeuvre pour déterminer l'épaisseur du revêtement 14 superficiel de l'élément bimétallique consite à utiliser un capteur 30 à ultrasons fonctionnant dans une gamme de fréquences de 1 à 20 MHz, et à l'appliquer directement sur le revêtement 14 selon une direction sensiblement perpendiculaire à la surface sur laquelle s'appuie le clapet d'obturation lors du fonctionnement normal de la vanne 12. Le signal de sortie du capteur 30 est appliqué au circuit de traitement 28 comprenant un circuit de commande 40 et un ordinnateur 42 à processeur numérique.

Le circuit de commande 40 comprend des moyens de mise en forme et de traitement du signal de sortie du capteur 30, et des moyens de mémoire pour mémoriser des données de réglage et de paramétrage. Les paramètres que l'on entre dans le circuit de commande 40 concement principalement des informations de la vitesse de déplacement de l'onde ultrasonore pour chacun des constituants de l'élément bimétallique. Une première information v1 correspond à la vitesse de l'onde dans l'alliage du revêtement 14, et une deuxième information v2 est l'image de la vitesse dans l'acier du siège 16. A chaque matériau spécifique correspond une vitesse prédéterminée de l'onde ultrasonore.

Les données de réglage concernent des informations de calibrage en fonction des épaisseurs à mesurer. D'autres informations dimensionnelles relatives à la taille et au nombre de capteurs 30 sont également introduites dans le circuit de commande 40.

L'entrée de ces données et paramètres s'opère soit au moyen d'un lecteur associé au circuit de commande 40, soit directement par le clavier de l'ordinateur 42. Les moyens de calcul de l'ordinateur 42 utilisent un algorithme basé sur la formule (1) précitée, et élaborent un signal représentatif de l'épaisseur (e) du revêtement 14 anti-usure à partir des informations fournies par le circuit de commande 40.

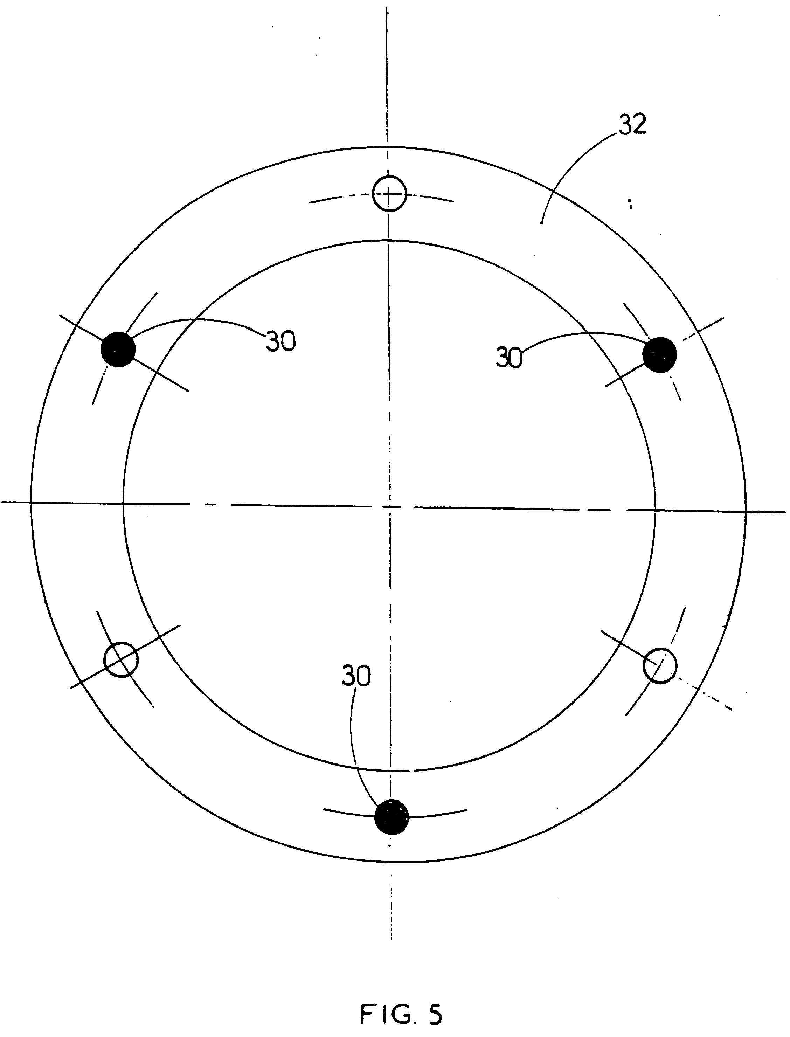

Sur la figure 5, une pluralité de capteurs 30 à ultrasons sont répartis à intervalles angulaires réguliers autour de la couronne de maintien 32, de manière à prendre la mesure en plusieurs points du revêtement 14. La couronne 32 est ajustable en rotation sur l'élément de support 20, ce qui permet de tester l'épaisseur du revêtement 14 sur toute la surface annulaire. Il est clair que le revêtement 14 anti-usure peut être constitué par plusieurs couches élémentaires superposées et de matériaux différentes.

## Revendications

1. Dispositif de mesure de l'épaisseur d'un revêtement (14) en alliage métallique au moyen d'un capteur (30) à ultra-sons connecté électriquement à un circuit de traitement (28) destiné à afficher la valeur de l'épaisseur dudit revêtement, lequel est fixé sur un substrat de matériau métallique différent de celui du revêtement pour constituer un élément bimétallique, le capteur (30) à ultra-sons étant appliqué directement sur la face externe du revêtement (14) pour émettre des ondes ultrasonores de fréquences comprises de 1 à 20 MHz à travers l'élément bimétallique,
caractérisé en ce qu'il comporte :

- un outillage (18) mécanique pourvu d'un élément de support (20) du capteur (30) à ultrasons, et d'un organe de positionnement (22) prenant appui sur une bride (24) du corps, notamment d'une vanne (12) ou d'un appareil de robinetterie,
- des moyens de mise en forme du signal de sortie du capteur (30),
- des moyens de mémoire pour mémoriser certaines données de réglage et de paramétrage relatives à la nature de différents matériaux de l'élément bimétallique,
- et des moyens de calcul qui élaborent un signal représentatif de l'épaisseur (e) du revêtement (14) superficiel à partir des informations fournies par les moyens de mise en forme, et des données de réglage et de paramétrage stockées dans les moyens de mémoire.

2. Dispositif de mesure selon la revendication 1, caractérisé en ce que le substrat est formé par un siège (16) annulaire en acier, ayant une dureté inférieure à celle du revêtement (14) superficiel.

3. Dispositif de mesure selon la revendication 2 caractérisé en ce que le revêtement (14) superficiel est formé par un alliage à base de cobalt, fer, chrome, et/ou magnésium et silicium, ou tout autre alliage métallique.

4. Dispositif de mesure selon la revendication 1, caractérisé en ce que l'élément du support (20) comporte une couronne (32) de maintien sur laquelle est répartie une pluralité de capteurs (30) à ultrasons destinés à effectuer des mesures simultanées en plusieurs points du revêtement (14).

5. Disposistif de mesure selon la revendication 4, caractérisé en ce que la couronne (32) de maintien des capteurs (30) est ajustable en rotation sur l'élément de support (20) pour tester globalement l'épaisseur (e) sur toute la surface annulaire.

6. Dispositif de mesure selon la revendication 1, caractérisé en ce que les informations de paramétrage enregistrées dans les moyens de mémoire concernent la vitesse de déplacement de l'onde ultrasonore de chacun des matériaux constitutifs de l'élément bimétallique.

7. Dispositif de mesure selon la revendication 6, caractérisé en ce que les informations de réglage enregistrées dans les moyens de mémoire concernent les données de calibrage en fonction de l'épaisseur à mesurer, et des données dimensionnelles relatives à la taille et au nombre de capteurs (30).

8. Dispositif de mesure selon la revendication 7, caractérisé en ce que l'entrée des informations de paramétrage et de réglage dans les moyens de mémoire s'opère soit au moyen d'un lecteur couplé au circuit de commande (40) du circuit de traitement (28), soit directement au moyen d'un clavier d'un ordinateur de contrôle.

FIG.1

FIG. 2

Temps $T_0$      T

FIG. 3B

FIG. 3A

6

30

40

42

16          14          26          28

FIG. 4

FIG. 5

# EP 0 872 709 A1

| | Office européen des brevets | **RAPPORT DE RECHERCHE EUROPEENNE** | Numéro de la demande EP 98 41 0036 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | US 4 398 421 A (WHITE DENNIS A) 16 août 1983<br>* abrégé *<br>* colonne 2, ligne 10 - ligne 43; figure 5 * | 1 | G01B17/02 |
| A,D | EP 0 429 854 A (NIPPON KOKAN KK) 5 juin 1991<br>* abrégé *<br>* page 3, ligne 4 - ligne 9 *<br>* page 3, ligne 34 - page 4, ligne 21; figure 1 * | 1 | |
| A | US 5 038 615 A (TRULSON FREDERICK J  ET AL) 13 août 1991<br>* abrégé; figures 1,2 * | 1 | |
| A,D | FR 2 483 073 A (JAPAN STEEL WORKS LTD) 27 novembre 1981<br>* revendication 1; figure 4 *<br>----- | 1 | |
| | | | **DOMAINES TECHNIQUES RECHERCHES (Int.Cl.6)**<br><br>G01B |

Le présent rapport a été établi pour toutes les revendications

| Lieu de la recherche | Date d'achèvement de la recherche | Examinateur |
|---|---|---|
| LA HAYE | 2 juillet 1998 | Ganci, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)